# EUROPEAN PATENT SPECIFICATION

(11) **EP 1 803 638 B1**
(45) Date of publication and mention of the grant of the patent: **09.07.2008**
(21) Application number: 05028671.5
(22) Date of filing: 29.12.2005
(51) Int. Cl.: B62M 3/08

(54) **Pedal for bicycle**
Pedale für ein Fahrrad
Pédale pour bicyclette

(43) Date of publication of application: 04.07.2007
(73) Proprietor: SHIMANO INC., Osaka 590-8577 (JP)
(72) Inventor: Kimitaka, Takahama c/o Shimano Inc., Osaka 590-8577 (JP); Nobuyuki, Kakinoki c/o Shimano Inc., Osaka 590-8577 (JP); Shinpei, Okajima, Izumi-shi Osaka (JP)
(74) Representative: Grosse, Wolfgang

(56) References cited:
- EP-A- 1 106 495
- DE-U1- 20 009 742
- DE-U1- 29 805 544
- FR-A- 2 648 104
- US-A- 4 538 480
- US-A- 4 716 784
- US-A- 6 128 973
- US-A1- 2005 061 104
- US-B1- 6 230 584
- US-B1- 6 244 136

## Description

This invention generally relates to a pedal for a bicycle according to the preamble of claim 1. More specifically, the present invention relates to a step-in or clipless bicycle pedal.

Bicycling is becoming an increasingly more popular form of recreation as well as a means of transportation. Moreover bicycling has become a very popular competitive sport for both amateurs and professionals. Whether the bicycle is used for recreation, transportation or competition, the bicycle industry is constantly improving the various components of the bicycle. One component that has been extensively redesigned is the bicycle pedal.

In recent years, bicycle pedals have been redesigned for specific purposes such as for pleasure, off road biking, road racing, etc. One particular type of a bicycle pedal which is gaining more popularity is the step-in or clipless pedal which releasably engages a cleat secured to the sole of a cyclist's shoe. The clipless pedal has an axle that can be mounted to a crank of a bicycle, a pedal body that is rotatably supported on said pedal axle, and at least one cleat engagement mechanism. In an off road bicycle pedal a cleat engagement mechanism is formed on both sides of the pedal body for engaging a cleat. A road-racing pedal, on the other hand, typically has only a cleat mechanism on one side of the pedal body. In either case, in these types of bicycle pedals the rider steps onto the pedal and at least one cleat engaging mechanism automatically grips on to the cleat secured to the bottom of the cyclist's shoe.

For example document US-A-6 128 973 discloses a pedal for a bicycle according to the preamble of claim 1.

With this type of step-in or clipless bicycle pedal, the shoe and the pedal are in a state of constant engagement when the cleat is engaged in the at least one cleat engagement mechanism, so that the pedalling force can be transmitted efficiently to the pedals. As a result, step-in or clipless pedals are widely employed on racing bicycles used in road racing and mountain bike racing.

When attaching the cyclist's shoe to the step-in or clipless pedal via the cleat, the cyclist moves the shoe obliquely downwardly and forwardly relative to the pedal body such that the cleat engages the at least one front cleat engaging mechanism of the pedal body, e.g. a front hook or clamping member of the pedal body, and, preferably, engages a second rear cleat engaging mechanism, e.g. a spring loaded rear hook or clamping member of the pedal body when the cyclist presses the shoe downwardly against the pedal. This causes the rear cleat engaging mechanism to initially pivot rearward against the force of a spring to move the rear cleat engaging mechanism to a cleat releasing position. The rear end of the cleat then passes the cleat engaging mechanism and the rear cleat engaging mechanism then returns under the force of a biasing member or spring so that the rear cleat engaging mechanism engages the rear end of the cleat. This engagement fixes the cyclist's shoe to the pedal via the cleat.

However, the step-in or clipless bicycle pedals known from the prior art sometimes do not transfer power to the bicycle crank arm in the most efficient manner. Moreover, these step-in or clipless pedals can be uncomfortable and cause fatigue to the rider's foot after extended riding periods. Finally, such step-in or clipless bicycle pedals known from the prior art can be complicated and expensive to manufacture and assemble.

In view of the above, there exists a need for a bicycle pedal which overcomes the above mentioned problems in the prior art. This invention addresses this need in the prior art as well as other needs which will become apparent to those skilled in the art from this disclosure.

It is an object of the present invention to provide a step-in or clipless bicycle pedal that is relatively easy to step into and to engage the cleat and which transfers power originating from the pedalling action of the cyclist in a most efficient way to the crank of the bicycle. Another object of the present invention is to provide a step-in or clipless bicycle pedal that is stiff and lightweight and relatively simple and inexpensive to manufacture. Another object of the present invention is to provide a step-in or clipless bicycle pedal that is relatively lightweight and malfunction free.

The forgoing objects can basically be achieved by providing a bicycle pedal comprising a pedal axle having a first end and a second end wherein the pedal axle builds the access of rotation of the pedal, a pedal body, having a main frame with a center tubular portion which receives the pedal axle in a bore so that said pedal body is rotatably covered to said second end of said pedal axle, at lease on cleat engaging mechanism being provided for coupling a cleat to the pedal body, a top plate being placed on the pedal body basically extending along said pedal axle for contacting the cleat, said top plate having a length extending substantially parallel to the access of rotation, and the pedal body has a dent portion extending in the rearward direction of the pedal body and along the access of rotation. Said dent portion has at least two projections extending from the center tubular portion of the pedal body and said top plate has a projection in the rearward direction of the top plate and said projection overlies the two projections of the dent portion when the top plate is mounted to the pedal body.

In another aspect of the present invention said top plate has a center line extending substantially parallel to the axis of rotation, wherein the distance between the center line and a rearward facing edge of the top plate is less than 13 mm.

In a further aspect of the present invention said cleat has a contact portion for contacting the top plate when the cleat is coupled to the pedal body, said contact portion having a width being less than the length of the said top plate.

Further following another aspect of the present invention said projection of the top plate extends in the direction of the rearward facing edge, said projection having at least one recess.

In another aspect of the present invention said top plate is substantially U-shaped, thus being partially extended in the outer portions along the outer edges of said pedal body.

In a further aspect of the present invention said top plate having at least two attachment holes for receiving fixing means therein.

Further following another aspect of the present invention said top plate is made of a metal material or a plastic material. Preferably, said top plate has a thickness of about 0,5 mm to 1,0 mm and said top plate is mounted to the pedal body by screwing and/ or gluing and/ or by deformable posts.

In a further aspect of the present invention said pedal body further has a projection that is provided for enlargement of said top plate. Said projection extends at least on the upper side of said pedal body in the direction of said second end of said pedal axis along the axis of rotation.

By such a bicycle pedal in accordance with the present invention a power transfer between the shoe of the cyclist and the crank of the bicycle is provided in a most efficient way. By providing slight lateral movement of the cleat when engaged in the pedal the movement of the shoe of the cyclist is transferred in a most economic way. Further, because of the extended top plate of the pedal the contact or interface area between the cleat and the pedal has been enlarged in the direction of the axis of rotation resulting in an increase of stiffness of about 11 % over bicycle pedals known from the prior art. The stability of the pedal is increased, too, resulting in a better riding performance. By providing said dent portion extending in the rearward direction of the pedal body and along the axis of rotation, said dent portion having at least two projections, extending from the pedal body a reduction of material and therewith weight of the pedal is achieved although increasing the strength and stiffness of the pedal.

These and other objects, features, aspects and advantages of the present invention will become apparent to those skilled in the art from the following detailed description, which, taken into conjunction with the annexed drawings, disclose a preferred embodiment of the present invention.

In detail it is now referred to the annexed drawings disclosing an embodiment of the present invention, but without any limitation, wherein
- Fig. 1: is a top perspective view of a right bicycle pedal adapted to be coupled to a crank arm of a bicycle in accordance with the present invention;
- Fig. 2: is a top plan view of a right bicycle pedal adapted to be coupled to a crank arm of a bicycle in accordance with the present invention;
- Fig. 3: is a longitudinal cross section view of a right bicycle pedal illustrated in Figs. 1 and 2 as seen along line A;
- Fig. 4: is a similar top plan view of a right bicycle pedal in accordance with the present invention, showing the interface portion between the cleat and a first embodiment of the top plate as shown in Fig. 2;
- Fig. 5: is a top perspective view of a second embodiment of a top plate with plastic posts adapted to be coupled to the upper side of the pedal in accordance with the present invention;
- Fig. 6: is a top perspective view of a third embodiment of the top plate with insertable plastic posts adapted to be coupled to the upper side of the pedal in accordance with the present invention;
- Fig. 7: is a top plan view of the downward facing side of a cleat adapted to be fixed to a bicycle shoe and to be coupled to a pedal in accordance with the present invention; and
- Fig. 8: is a right side view of the cleat of Fig. 7 adapted to be fixed to a bicycle shoe and to be coupled to a pedal in accordance with the present invention.

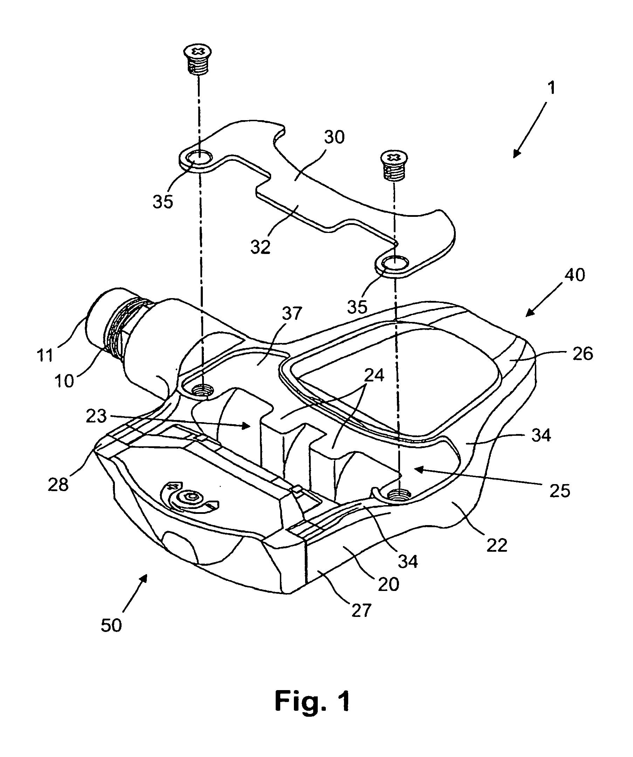

Referring to Figs. 1 to 4 a bicycle pedal 1 is illustrated in accordance with the present invention. The bicycle pedal is a step-in or clipless pedal that can be used with a bicycle shoe (not shown) with a cleat 2 coupled thereto. The bicycle pedal 1 is especially designed to be used with a road bicycle as opposed to be used with an off-road bicycle. Of course, the bicycle pedal 1 can be used on any type of bicycle if needed and/ or desired. Moreover, the bicycle pedal 1 may be designed as an off-road bicycle pedal such that the cleat 2 can be attached to either side of the bicycle pedal 1. The bicycle pedal 1 is adapted to be fixedly coupled to a crank arm (not shown) of a bicycle for rotation therewith while the cleat 2 is adapted to be fixedly coupled to the sole of the bicycle shoe (not shown).

The bicycle pedal illustrated in the Figs. 1 to 4 is a right side pedal. Of course, the same pedals are provided on the right and left sides of the bicycle, except that the left side pedal is a mirror image of the right side pedal 1. Thus, it will be apparent to those skilled in the art that the description of the right side pedal also applies to a left side pedal.

As seen in Figs. 1 to 4 the bicycle pedal basically includes a pedal axle 10 adapted to be coupled to a crank arm (not shown) of a bicycle and a pedal body 20 for supporting a cyclist's foot. Pedal body 20 basically includes at least one cleat engaging mechanism having preferably a first clamping member 40 and a second clamping member 50, the first and second clamping members 40 and 50 define the cleat engagement mechanism that is coupled to an upper surface of the pedal body 20 and arranged to move between a clamping position and a release position. First and second clamping members 40, 50 are provided for coupling the cleat 2 to the pedal body 20 wherein the first or front clamping member 40 is fixed to the pedal body to form a stationary clamping member and the second or rear clamping member 50 is spring loaded and movably coupled to the pedal body 20. As the at least one cleat engaging mechanism 40, 50 is well known from the prior art it will not be discussed in detail herein.

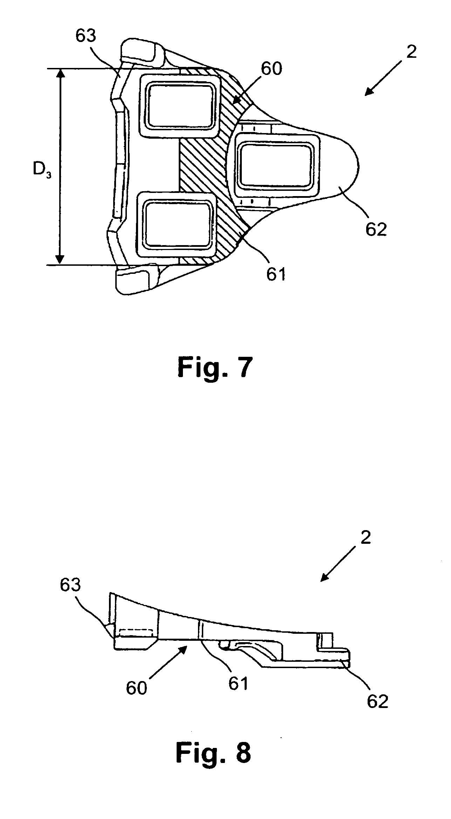

The cleat 2 as shown in Figs. 7 and 8 is designed to releasably couple the sole of the bicycle shoe (not shown) to the bicycle pedal by first and second clamping members 40, 50. Such a type of pedal is a so called step-in or clipless pedal. Specifically, cleat 2 is engaged with pedal 1 by pressing the cleat into pedal 1 with a forward and downward motion. This releasably locks cleat 2 into the cleat engaging mechanism 40, 50 of pedal 1. Cleat 2 can be released from pedal 1 by twisting the heel of the shoe (not shown) to the outside of the pedal as already known from step-in or clipless pedals known from the prior state of the art.

Referring to Figs. 7 and 8, bicycle shoe cleat 2 is fixed to sole of shoe (not shown) by three screws or fasteners in a conventional manner. Since pedal cleat 2 is relatively conventional and its specific construction is not critical to the present invention, the construction of cleat 2 will not be discussed in detail herein. While cleat 2 is illustrated as a one-piece member, it will be apparent to those skilled in the art from this disclosure that cleat 2 can be constructed of several separate pieces.

Basically, cleat 2 of the illustrated embodiment includes a middle attachment portion 61, a first coupling portion 62 extending from the forward facing end of the attachment portion 61 and a second coupling portion 63 extending from the rearward facing end of the attachment portion 61. In the illustrated embodiment, the first coupling portion 62 is a front coupling member that engages the front clamping member 40, while the second coupling portion 63 is a rear coupling member that engages the rear clamping member 50.

The attachment portion 61 has an upper sole side facing in a first direction for engaging the sole of the shoe (not shown) and a lower side facing in a second direction, which is substantially opposite to the first direction. Preferably, attachment portion 61 and coupling portions 62 and 63 are integrally formed as a one-piece, unitary member which is constructed from a suitable rigid material. For example, cleat 2 can be constructed from a metallic material, which is stamped from a sheet metal material, or cast or machined. Front coupling portion 62 and rear coupling portion 63 are designed to engage the first and second clamping members 40 and 50 for limiting relative longitudinal movement. The front coupling member of the cleat 2 has a curved front surface acting as a pivot point for releasing cleat 14 from the pedal body 22.

A contact portion 60 is provided for on the lower side of the attachment portion 61 facing in the second direction, said contact portion 60 contacts the pedal body 20 when cleat 2 is engaged into the cleat engagement mechanism 40, 50 of the pedal 1. More specifically, the contact portion is defined as the space located between the front and rear coupling portions 62 and 63. The contact portion 60 has a width D₃ extending in a direction substantially parallel to the pedal axle 10.

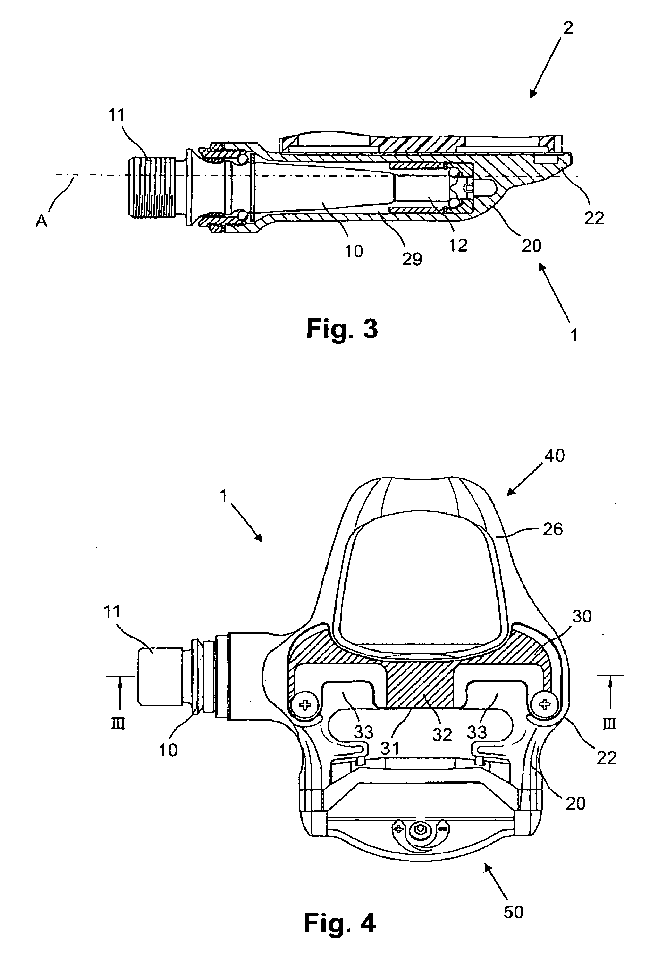

Referring again to Figs. 1 through 4, the pedal axle 10 has a first end 11 with threads formed thereon for threadedly coupling pedal 1 to a crank (not shown) of a bicycle in a conventional manner. As seen in Fig. 3, the other or second end 12 of the pedal axle 10 rotatably supports pedal body 20 in a conventional manner, e.g. via bearings. Pedal body 20 can freely rotate about pedal axle 10 building the axis of rotation A of the pedal 1. Since pedal axle 10 is relatively conventional and its specific construction is not critical to the present invention, the construction of pedal axle 10 will not be discussed in detail herein.

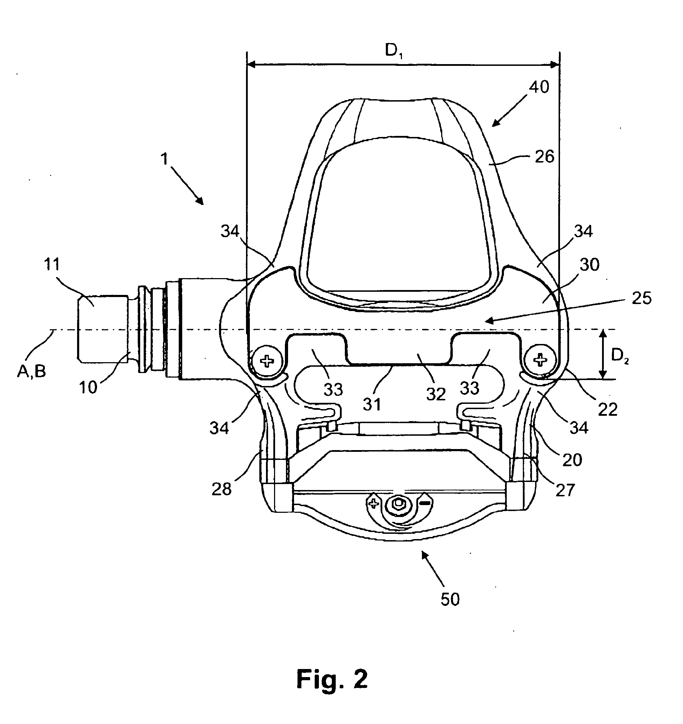

The pedal body 20 is preferably made of a lightweight material such as an aluminum alloy. Preferably, one of the clamping members 40 or 50 is located at each end of pedal body 20 as is best shown in Figs. 2 or 4. As shown in Figs. 1, 2 and 4, the pedal body 20 has a main frame with a center tubular portion 25, a curved front end portion 26 extending from center tubular portion 25, and a pair of support members 27 and 28 forming the rear end portion of pedal body 20. Pedal axle 10 is received in a bore 29 formed in center tubular portion 25 so that pedal body 20 rotates about the axis of rotation A.

The pedal body further has a dent portion 23 extending in the rearward direction of the pedal body 20 and along the axis of rotation A from the center tubular portion 25. Said dent portion 23 has two projections 24 or dents, extending from the center tubular portion 25 of the pedal body 20. The contact portion 60 of the cleat 2 is mainly received on the center tubular portion 25 of the pedal body 20. More specifically, the cleat receiving area of the pedal 1 is defined as the space located between the front and rear clamping members 40 and 50.

A projection 22 is provided for enlargement of the upper surface of said central tubular section 25, said projection 22 extending on the upper side of said pedal body 20 in the direction of said second end 12 of said pedal axis 10 along the axis of rotation A thereby enlarging the cleat receiving area.

The bicycle pedal has a top plate 30 overlying the upper central section 25 of the pedal body 20. Said top plate 30 has a center line B extending substantially parallel to the axis of rotation A and a length D₁ extending substantially parallel to the center line B. Said length D₁ of said top plate 30 is more than 55 mm.

The distance D₂ between the center line B and a rearward facing edge 31 of the top plate 30 is less than 13 mm. However, in any case the length D₁ of the top plate 30 is more than the width D₃ of the contact portion 60 of the cleat 2. Therefore, a slight side movement of the cleat, preferably around the pivot point defined by front coupling member of the cleat 2 in connection with the front clamping member 50 is possible when the cleat 2 is engaged into the pedal 1.

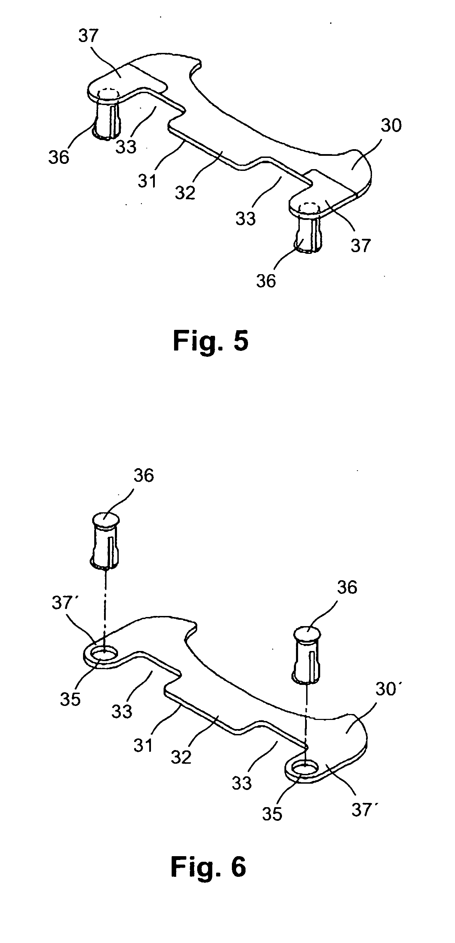

A projection 32 is provided for in the rearward portion of the top plate 30. Said projection extends in the direction of the rearward facing edge 31. Two recesses 33, as best seen in Figs. 5 and 6 (showing a second embodiment of the top plate with two integrated or fixed plastic posts 36 and a third embodiment of the top plate with two insertable plastic posts 36, respectively) are provided in the rearward portion of the top plate 30. As shown in Fig. 2 and 4 the projection overlies the dent portion 23, especially the two projections 24 or dents when the top plate 30 is mounted to the pedal body 20.

The top plate 30 is extended to the upper surface of the projection 22; thereby also the top plate 30 is enlarged over prior art top plates central tubular section 25. The top plate 30 being extended to a length of at least 55 mm, preferably to a length of 62 mm, on the upper side of said pedal body 20 in the direction of said second end 12 of said pedal axis 10 along the axis of rotation A.

Preferably, a portion of the substantially U-shaped top plate 30 extends along the outer side of the pedal body 20 thus being partially extended in the outer portions 34 along the outer edges of said pedal body 20. The top plate 30 is preferably fixedly secured in a recess 37 formed in the pedal body 22 by a friction fit. Alternatively, said top plate 30 is mounted to the pedal body 20 by screwing and/ or gluing and/ or by deformable posts 36 which are inserted into at least two attachment holes 35 in the outer portion of the top plate 30 provided for receiving said fixing means therein. The top plate is made of a metal material or a plastic material and preferably has a thickness of about 0,5 mm to 1,0 mm.

As shown in Fig. 5 and according to the second embodiment of the top plate 30 of the present invention the main body of the top plate 30 is made of a first material, especially metal material, e.g. stainless steel. The left and right mounting portions 37 are made of a second material, especially plastic. The left and right mounting portions 37 are fixedly coupled to the main body of the top plate 30 e.g. by gluing or molding. Deformable posts 36 are formed to the downward facing surface of the left and right mounting portions 37 thus at the same time provide the fixing means for coupling the top plate 30 to the pedal body 20.

The top plate 30 as shown in Fig. 6 and according to another embodiment of the present invention is constructed as a one-piece unitary member being made of a metal material, e.g. stainless steel. Attachment holes 35 are provided for in order to receive fixing means, e.g. screws therein in order to mount the top plate 30 to the pedal body 20 of the bicycle pedal 1.

## Claims

1. A pedal (1) for a bicycle comprising:
a pedal axle (10) having a first end (11) and a second end (12), the pedal axle (10) building the axis of rotation (A) of the pedal (1),
a pedal body (20) having a main frame with a center tubular portion (25), which receives the pedal axle (10) in a bore (29) so that said pedal body is rotatably coupled to said second end (12) of said pedal axle (10),
at least one cleat engaging mechanism (40, 50) being provided for coupling a cleat (2) to the pedal body (20)
a top plate (30) being placed on the pedal body (20) basically extending along said pedal axle (10) for contacting the cleat (2), said top plate (30) having a length (D₁) extending substantially parallel to the axis of rotation (A),
the pedal body (20) having a dent portion (23) extending in the rearward direction of the pedal body (20) and along the axis of rotation (A),
**characterized in that**
said dent portion (23) has at least two projections (24) extending from the center tubular portion (25) of the pedal body (20) and
said top plate (30) has a projection (32) in the rearward direction of the top plate (30) and said projection (32) overlies the two projections (24) of the dent portion (23) when the top plate (30) is mounted to the pedal body (20).

2. The pedal (1) according to claim 1, **characterized in that** said top plate (30) having a center line (B) extending substantially parallel to the axis of rotation (A), wherein the distance (D₂) between the center line (B) and a rearward facing edge (31) of the top plate (30) is less than 13 mm.

3. The pedal (1) according to one of the preceding claims, **characterized in that** said projection (32) of the top plate (30) extending in the direction of the rearward facing edge (31), said projection (32) having at least one recess (33).

4. The pedal (1) according to one of the preceding claims, **characterized in that** said top plate (30) is substantially U-shaped, thus being partially extended in the outer portions (34) along the outer edges of said pedal body (20).

5. The pedal (1) according to one of the preceding claims, **characterized in that** said top plate (30) having at least two attachment holes (35) for receiving fixing means therein.

6. The pedal (1) according to one of the preceding claims, **characterized in that** said top plate (30) is made of a metal material or a plastic material.

7. The pedal (1) according to one of the preceding claims, **characterized in that** said top plate (30) having a thickness of about 0,5 mm to 1,0 mm.

8. The pedal (1) according to one of the preceding claims, **characterized in that** said top plate (30) is mounted to the pedal body (20) by screwing and/or gluing and/or by deformable posts (36).

9. The pedal (1) according to one of the preceding claims, **characterized in that** said pedal body (20) having a projection (22) being provided for enlargement of said top plate (20), said projection (22) extending at least on the upper side of said pedal body (20) in the direction of said second end (12) of said pedal axis (10) along the axis of rotation (A).

10. A pedal assembly comprising a pedal (1) according to any of the preceding claims and a cleat (2) being releasably engageable to the pedal.

11. The pedal assembly according to claim 10, **characterized in that**
said cleat (2) having a contact portion (60) for contacting the top plate (30) when the cleat (2) is coupled to the pedal body (20), said contact portion (60) having a width (D₃) being less than the length (D₁) of the said top plate (30).

## Patentansprüche

1. Pedal (1) für ein Fahrrad, aufweisend:
eine Pedalachse (10), die ein erstes Ende (11) und ein zweites Ende (12) aufweist, wobei die Pedalachse (10) die Drehachse (A) des Pedals (1) bildet, einen Pedalkörper (20), der einen Hauptrahmen mit einem mittleren rohrförmigen Abschnitt (25) aufweist, der die Pedalachse (10) in einer Bohrung (29) aufnimmt, so dass der Pedalkörper mit dem zweiten Ende (12) der Pedalachse (10) drehbar verbunden ist,
mindestens einen Stolleneingreifmechanismus (40, 50), der vorgesehen ist, um einen Stollen (2) mit dem Pedalkörper (20) zu verbinden,
eine obere Platte (30), die auf dem Pedalkörper (20) platziert ist und sich im Wesentlichen entlang der Pedalachse (10) erstreckt, um mit dem Stollen (2) in Kontakt zu kommen, wobei die obere Platte (30) eine Länge (D₁) aufweist, die sich im Wesentlichen parallel zur Drehachse (A) erstreckt,
wobei der Pedalkörper (20) einen vertieften Abschnitt (23) aufweist, der sich in rückwärtiger Richtung des Pedalkörpers (20) und entlang der Drehachse (A) erstreckt,
**dadurch gekennzeichnet, dass**
der vertiefte Abschnitt (23) mindestens zwei Vorsprünge (24) aufweist, die sich vom mittleren rohrförmigen Abschnitt (25) des Pedalkörpers (20) aus erstrecken, und
die obere Platte (30) einen Vorsprung (32) in rückwärtiger Richtung der oberen Platte (30) aufweist und der Vorsprung (32) über den zwei Vorsprüngen (24) des vertieften Abschnittes (23) zu liegen kommt, wenn die obere Platte (30) am Pedalkörper (20) montiert ist.

2. Pedal (1) nach Anspruch 1, **dadurch gekennzeichnet, dass** die obere Platte (30) eine Mittellinie (B) aufweist, die sich im Wesentlichen parallel zur Drehachse (A) erstreckt, wobei der Abstand (D₂) zwischen der Mittellinie (B) und einer nach hinten weisenden Kante (31) der oberen Platte (30) weniger als 13 mm beträgt.

3. Pedal (1) nach einem der vorhergehenden Ansprüche, **dadurch gekennzeichnet, dass** der Vorsprung (32) der oberen Platte (30) sich in Richtung der nach hinten weisenden Kante (31) erstreckt, wobei der Vorsprung (32) mindestens eine Aussparung (33) aufweist.

4. Pedal (1) nach einem der vorhergehenden Ansprüche, **dadurch gekennzeichnet, dass** die obere Platte (30) im Wesentlichen U-förmig ist, und sich somit teilweise in die äußeren Abschnitte (34) entlang der Außenkanten des Pedalkörpers (20) erstreckt.

5. Pedal (1) nach einem der vorhergehenden Ansprüche, **dadurch gekennzeichnet, dass** die obere Platte (30) mindestens zwei Befestigungslöcher (35) zur Aufnahme von Befestigungseinrichtungen aufweist.

6. Pedal (1) nach einem der vorhergehenden Ansprüche, **dadurch gekennzeichnet, dass** die obere Platte (30) aus einem Metallmaterial oder einem Kunststoffmaterial besteht.

7. Pedal (1) nach einem der vorhergehenden Ansprüche, **dadurch gekennzeichnet, dass** die obere Platte (30) eine Dicke von ca. 0,5 mm bis 1,0 mm hat.

8. Pedal (1) nach einem der vorhergehenden Ansprüche, **dadurch gekennzeichnet, dass** die obere Platte (30) am Pedalkörper (20) durch Verschrauben und/oder Verkleben und/oder durch verformbare Stäbe (36) befestigt ist.

9. Pedal (1) nach einem der vorhergehenden Ansprüche, **dadurch gekennzeichnet, dass** der Pedalkörper (20) einen Vorsprung (22) aufweist, der zur Vergrößerung der oberen Platte (20) vorgesehen ist, wobei sich der Vorsprung (22) zumindest auf der Oberseite des Pedalkörpers (20) in Richtung des zweiten Endes (12) der Pedalachse (10) entlang der Drehachse (A) erstreckt.

10. Pedalbaugruppe, die ein Pedal (1) nach einem der vorhergehenden Ansprüche und einen Stollen (2) beinhaltet, der mit dem Pedal lösbar in Eingriff gebracht werden kann.

11. Pedalbaugruppe nach Anspruch 10, **dadurch gekennzeichnet, dass**
der Stollen (2) einen Kontaktabschnitt (60) aufweist, um mit der oberen Platte (30) in Kontakt zu kommen, wenn der Stollen (2) mit dem Pedalkörper (20) verbunden ist, wobei der Kontaktabschnitt (60) eine Breite (D₃) aufweist, die kleiner als die Länge (D₁) der oberen Platte (30) ist.

## Revendications

1. Pédale (1) pour une bicyclette comprenant :
un axe de pédale (10) présentant une première extrémité (11) et une seconde extrémité (12), l'axe de pédale (10) formant l'axe de rotation (A) de la pédale (1),
un corps de pédale (20) présentant un cadre principal doté d'une partie tubulaire centrale (25), qui reçoit l'axe de pédale (10) dans un alésage (29) de sorte que ledit corps de pédale est couplé de manière rotative à ladite seconde extrémité (12) dudit axe de pédale (10),
au moins un mécanisme de mise en prise avec une cale (40, 50) étant prévu pour coupler une cale (2) au corps de pédale (20),
une plaque supérieure (30) étant placée sur le corps de pédale (20) s'étendant fondamentalement le long dudit axe de pédale (10) pour être en contact avec la cale (2), ladite plaque supérieure (30) présentant une longueur (D₁) s'étendant sensiblement parallèlement à l'axe de rotation (A),
le corps de pédale (20) présentant une partie d'enfoncement (23) s'étendant dans la direction arrière du corps de pédale (20) et le long de l'axe de rotation (A),
**caractérisée en ce que**
ladite partie d'enfoncement (23) présente au moins deux saillies (24) s'étendant à partir de la partie tubulaire centrale (25) du corps de pédale (20) et
ladite plaque supérieure (30) présente une saillie (32) dans la direction arrière de la plaque supérieure (30) et ladite saillie (32) recouvre les deux saillies (24) de la partie d'enfoncement (23) lorsque la plaque supérieure (30) est montée sur le corps de pédale (20).

2. Pédale (1) selon la revendication 1, **caractérisée en ce que** ladite plaque supérieure (30) présente une ligne médiane (B) s'étendant sensiblement parallèlement à l'axe de rotation (A), dans laquelle la distance (D₂) entre la ligne médiane (B) et un bord tourné vers l'arrière (31) de la plaque supérieure (30) est inférieure à 13 mm.

3. Pédale (1) selon l'une quelconque des revendications précédentes, **caractérisée en ce que** ladite saillie (32) de la plaque supérieure (30) s'étend dans la direction du bord tourné vers l'arrière (31), ladite saillie (32) présentant au moins un évidement (33).

4. Pédale (1) selon l'une quelconque des revendications précédentes, **caractérisée en ce que** ladite plaque supérieure (30) est sensiblement en forme de U, étant ainsi en partie étendue dans les parties externes (34) le long des bords externes dudit corps de pédale (20).

5. Pédale (1) selon l'une quelconque des revendications précédentes, **caractérisée en ce que** ladite plaque supérieure (30) présente au moins deux trous de fixation (35) destinés à y recevoir des moyens de fixation.

6. Pédale (1) selon l'une quelconque des revendications précédentes, **caractérisée en ce que** ladite plaque supérieure (30) est composée d'un matériau métallique ou d'un matériau plastique.

7. Pédale (1) selon l'une quelconque des revendications précédentes, **caractérisée en ce que** ladite plaque supérieure (30) présente une épaisseur d'environ 0,5 mm à 1,0 mm.

8. Pédale (1) selon l'une quelconque des revendications précédentes, **caractérisée en ce que** ladite plaque supérieure (30) est montée sur le corps de pédale (20) par vissage et/ou collage et/ou par des montants déformables (36).

9. Pédale (1) selon l'une quelconque des revendications précédentes, **caractérisée en ce que** ledit corps de pédale (20) présente une saillie (22) prévue pour élargir ladite plaque supérieure (20), ladite saillie (22) s'étendant au moins sur le côté supérieur dudit corps de pédale (20) dans la direction de ladite seconde extrémité (12) dudit axe de pédale (10) le long de l'axe de rotation (A).

10. Ensemble de pédale comprenant une pédale (1) selon l'une quelconque des revendications précédentes et une cale (2) pouvant être mise en prise de manière libérable avec la pédale.

11. Ensemble de pédale selon la revendication 10, **caractérisé en ce que**
ladite cale (2) présente une partie de contact (60) destinée à être en contact avec la plaque supérieure (30) lorsque la cale (2) est couplée au corps de pédale (20), ladite partie de contact (60) présentant une épaisseur (D₃) inférieure à la longueur (D₁) de ladite plaque supérieure (30).
